(19)

Europäisches
Patentamt
European
Patent Office
Office européen
des brevets

(11) **EP 3 885 487 A1**

(12) **EUROPEAN PATENT APPLICATION**
published in accordance with Art. 153(4) EPC

(43) Date of publication:
**29.09.2021 Bulletin 2021/39**

(21) Application number: **20878030.4**

(22) Date of filing: **14.02.2020**

(51) Int Cl.:
***D07B /*** *(2006.01)*

(86) International application number:
**PCT/ES2020/070105**

(87) International publication number:
**WO 2021/160904 (19.08.2021 Gazette 2021/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Universidad De La Iglesia De Deusto
48007 Bilbao (ES)**

(72) Inventor: **The designation of the inventor has not
yet been filed**

(74) Representative: **Ezcurra Zufia, Maria Antonia
Iparraguirre, 15
48009 Bilbao (ES)**

(54) **DIGITALISED ROPE OR CABLE**

(57) A digitalised rope or cable comprising a series of sensors for measuring the tension or force to which the cable or rope is subjected and which has means of transmitting the tension values measured to the exterior to processing units for recording and analysis, where the force exerted at each point is the result of the difference between the tension value measured by a measuring sensor placed immediately upstream of and the tension value of the sensor measured downstream of the point of application of the force and the measuring sensors may be strain gauges (6) fitted with cables (7) or piezoresistive sensors (8) interconnected by a single fibre optic cable (9), or directly a fibre optic sensor fitted with FBG (Fiber Bragg Grating) technology. By means of the digitalised rope or cable it is possible to ascertain the individually exerted force profiles (10) and the joint profiles (11)

EP 3 885 487 A1

## Description

## OBJECT OF THE INVENTION

The object of the present invention, as established in the title of the invention, is a digitalised rope or cable that allows the individual and joint forces exerted on a rope or similar to be measured.

The present invention is characterised by the special design and use of elements that offer a specific function, achieving what has been described as a digital rope, that is, a rope that allows the individual forces exerted in each zone and the combined force to be ascertained.

The rope that forms the object of the invention is for use primarily, but not exclusively, for the game of tug-of-war (tug of war, tug o' war, tug war, rope war, rope pulling, or tugging war) in which two teams with the same number of members, with a combined weight not exceeding the maximum specified weight for a given category, line up at either end of a rope facing each other, each team pulling in opposite directions. The rope that forms the object of the invention determines the profiles of the force exerted by each member of each team and by the team as a whole.

The present invention therefore pertains on the one hand, to means for measuring tension in cables and similar, and on the other hand, to the ambit of ropes.

## BACKGROUND TO THE INVENTION

In the state of the art, the use of diverse sensors fitted to cables and elements subjected to tension for the purposes of determining the tension to which said cables are subjected is well known.

However, when a cable or rope is subjected to individually-applied tensile forces, it has been seen to be necessary to determine the force or tension profile to which each zone is subjected, in order that the overall force profile of the entire cable or rope can subsequently be ascertained.

The object of the present invention is therefore to develop a rope or similar in a digitalized manner that enables the individual forces applied to the rope to be determined, by developing a rope or cable such as that described hereinafter, whose essence is set out in the first claim.

## DESCRIPTION OF THE INVENTION

The object of the present invention is a digitalized rope or cable inside which is housed a series of sensors that measure the tension or force to which the cable or rope is subjected and which has a means of transmitting the tension values thus measured to the exterior to be recorded and analysed.

In order to identify the areas where the forces to be analysed are to be applied on the cable or rope, there are a series of marks on the exterior in the vicinity of the location of the measuring sensors.

Between the measuring sensors, strain gauges can be used that provide a tension value directly proportional to the tension to which they are subjected and which transmit these tension values by way of a pair of wires running inside the rope or cable to one end where they are connected to a processing unit such as a computer or similar which enables the tension values to be stored and recorded continuously.

Other types of sensor that can be used include piezoresistive sensors, also housed in the core or inside the cable or rope, connected to one other by a single fibre-optic cable which, through by means of networks of different periods, enable each piezoresistive sensor to be measured individually.

A third embodiment would consist of the use of a fibre-optic sensor housed along the length of the interior of the rope and protruding from one end, connected to an interrogator responsible for emitting and receiving a light signal, where the fibre-optic sensor incorporates Fiber Bragg Grating (FBG) technology.

It would also be possible to fit each measurement sensor, whatever the type, with means of wireless transmission via Bluetooth or Wi-Fi to a computer or processing unit that would enable continuous recording of the forces exerted in each particular area.

Unless otherwise indicated, all technical and scientific elements used in this specification have the meaning habitually understood by a person skilled in the art to which this invention pertains. In the practice of the present invention, similar or equivalent procedures and materials to those described in the specification may be used.

Throughout the description and the claims the word "contains", "comprises" and any variations thereon shall not be intended to exclude other technical characteristics, additives, components or steps. For experts in the field, other objects, advantages and characteristics of the invention will emerge partly from the description and partly from practice with the invention.

## DESCRIPTION OF FIGURES

To complete the description made herein and in order better to aid understanding of the characteristics of the invention, according to a preferential example of a practical embodiment thereof, this description is accompanied by a set of drawings showing as follows in indicative, but not limitative terms.

Figure 1 shows a representation of a rope on which two people are pulling in opposite directions.

Figure 2 shows two people pulling in the same direction and a series of sensors measuring the forces to which each zone is subjected.

Figure 3 shows a first embodiment in which the measuring sensors are strain gauges.

Figure 4 shows a second embodiment in which the sensors used are piezoresistive sensors.

Figure 4B shows a third embodiment based on the use of a fibre-optic sensor embedded in the rope.

Figure 5 shows an example of two teams pulling a rope in opposite directions, where the individual and joint force profiles of each team are shown.

## PREFERRED EMBODIMENT OF THE INVENTION.

As per the figures, one preferred embodiment of the proposed invention is described below.

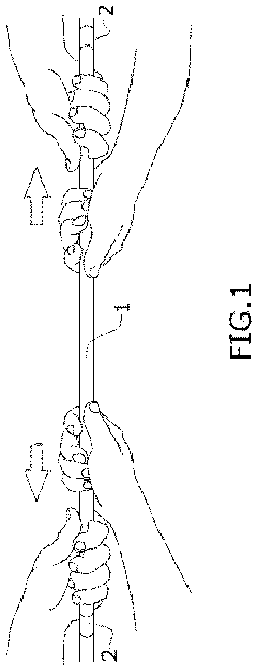

Figure 1 shows a rope or cable (1) on which two people are pulling in opposite directions and on which there are some external marks (2) indicating where certain measuring sensors are located internally so that the individuals or the media that are to exert the traction force may be positioned accordingly.

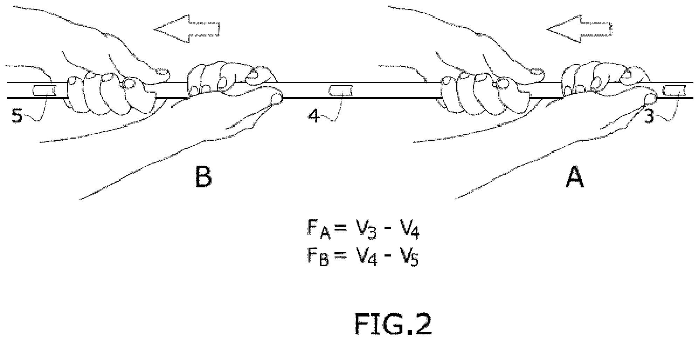

Figure 2 shows two people, Player A and Player B, both exerting traction force in the same direction on the rope or cable. In the figure, one can observe a first measuring sensor (3), a second measuring sensor (4) and a third measuring sensor (5), so that when properly positioned, the force exerted by Player A is the difference in tension between the first measuring sensor (3) and the second measuring sensor (4), while the force exerted by the second player (B) is the difference in tension between the second measuring sensor (4) and the third measuring sensor (5).

$$F(A) = T(3) - T(4)$$

$$F(B) = T(4) - T(5).$$

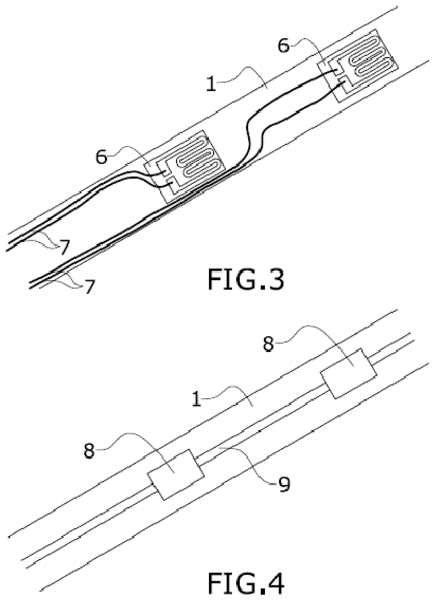

Figure 3 shows a first embodiment in which the measuring sensors are strain gauges (6) where each gauge is provided with cables (7) to extract the signal to one end of the rope or cable where they will be connected to the processing units that enable continuous recording of the forces exerted.

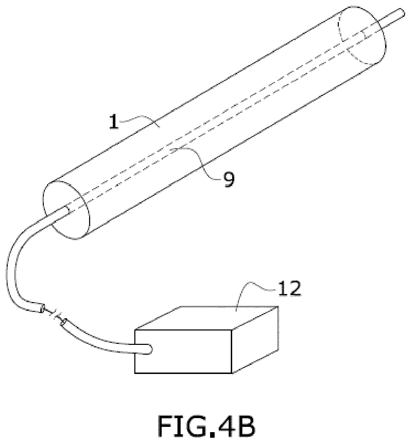

Figure 4 shows a second embodiment in which the measuring sensors are piezoresistive sensors (8) interconnected by means of a single fibre-optic cable (9) with quasi-distributed technologies based on Fiber Bragg Gratings (FBGs).

Figure 4B shows a third embodiment in which the measuring sensors are a fibre-optic sensor (9) directly housed inside the rope along its length, wherein the fibre optic sensor incorporates FBG (Fibre Bragg Grating) technology that allows measurements to be taken at different distances.

As can be observed in Figure 4B, the optical fibre (9) protrudes from one end of the rope (1) and is connected to a light beam emitter/receiver, known as an interrogator (12), which measures the strain of the optical fibre and thus of the rope along different points on the rope (1) where the FBGs are located. For this purpose, it uses the properties of reflection and refraction of light at different wavelengths, not requiring intermediate elements that protrude from the rope, since it is the fibre itself that generates the strain information in each FBG and transmits it to the interrogator (12).

As the interrogator (12) can be connected and disconnected to the fibre (9) it is possible to connect different ropes to the interrogator.

An FBG is a periodic variation (period $\Lambda$) in the refractive index (neff) in the fibre core, such that when the wavelength of the incident light meets the condition of being 2-neff- $\Lambda$, that spectral component, called the Bragg wavelength ($\lambda$B), is reflected back by the fibre itself, while the remainder of the spectral components are transmitted forwards with very low losses.

Thus, if networks with different periods are created along the same optical fibre, multiple sensors may be integrated in the same line, thus introducing a quasi-distributed measurement system.

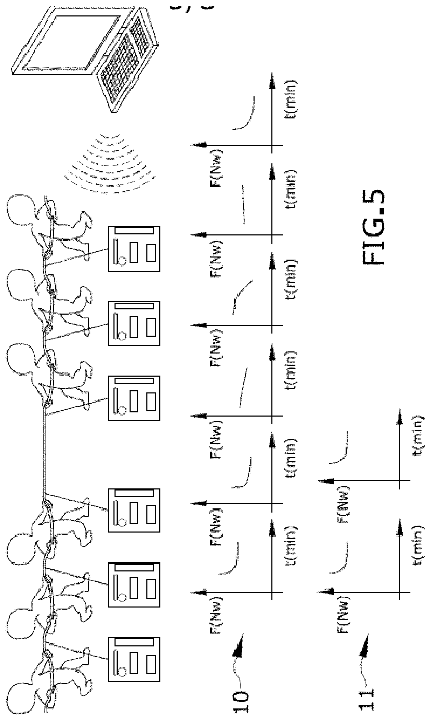

Figure 5 shows two teams of players pulling in opposite directions on a rope or cable wherein thanks to the measuring sensors applied on the rope or cable it is possible to obtain over time the individual force profiles (10) of each player, and the force profile of each team (11).

In its application to the game of tug-of-war this would make it possible to determine the weak points of each team, those places where improvements might be made and what the most suitable type of force to be exerted in each competition would be.

Having sufficiently described the nature of the present invention, and the means of implementing it, it is noted that within the same essence, it may be made in other embodiments differing in detail from that indicated herein as an example, and to which the protection obtained shall equally extend, provided that it does not alter, change or modify its basic principle.

## Claims

1. Digitalised rope or cable **characterized in that** it contains within it a series of sensors that measure the tension or force to which the cable or rope is subjected and which has means of transmitting the tension values thus measured to processing units in the exterior so that they can be recorded and analysed.

2. Digitalised rope or cable in accordance with Claim 1, **characterized in that** the force exerted at each point is the result of the difference between the tension value measured by a measuring sensor placed immediately upstream and the tension value of the sensor measured downstream of the point at which the force is applied.

3. Digitalised rope or cable in accordance with Claim 1 or 2, **characterized in that** on the outside of the cable or rope there are a series of marks in the vicinity of the location of the measuring sensors.

4. Digitalised rope or cable in accordance with Claim 1 or 2 or 3 **characterized in that** the measuring sensors are strain gauges (6) where each gauge is fitted with cables (7) to extract the signal to one end of the rope or cable, from where it will be connected to processing units.

5. Digitalised rope or cable in accordance with Claim 1 or 2 or 3, **characterized in that** the measuring sensors are piezoresistive sensors (8) interconnected by means of a single fibre optic cable (9)

6. Digitalised rope or cable in accordance with Claim 1 or 2 or 3 **characterized in that** the measuring sensor is a fibre optic sensor (9) directly housed inside the rope (1) along its length, where the fibre optic sensor (9) incorporates FBG technology, said fibre optic sensor (9) protruding at one end of the rope (1) being connected to a light beam emitter/receiver, known as an interrogator (12), which shall be responsible for measuring strain in the optical fibre and therefore of the rope along different points of the rope (1)

7. Digitalised rope or cable in accordance with any one of the preceding claims, **characterized in that** the sensors measuring the tension or force to which the cable or rope is subjected are equipped with means of wireless transmission by means of a computer or processing unit.

FIG.1

$$F_A = V_3 - V_4$$
$$F_B = V_4 - V_5$$

FIG.2

FIG.3

FIG.4

FIG.4B

FIG.5

## INTERNATIONAL SEARCH REPORT

| | International application No. |
|---|---|
| | PCT/ES2020/070105 |

**A. CLASSIFICATION OF SUBJECT MATTER**

See extra sheet

According to International Patent Classification (IPC) or to both national classification and IPC

**B. FIELDS SEARCHED**

Minimum documentation searched (classification system followed by classification symbols)
D07B, G01L, A63B

Documentation searched other than minimum documentation to the extent that such documents are included in the fields searched

Electronic data base consulted during the international search (name of data base and, where practicable, search terms used)

EPODOC, INVENES, NPL, INTERNET

**C. DOCUMENTS CONSIDERED TO BE RELEVANT**

| Category* | Citation of document, with indication, where appropriate, of the relevant passages | Relevant to claim No. |
|---|---|---|
| X | US 2005226584 A1 (WILLIAMS JERRY G ET AL.) 13/10/2005; abstract; paragraphs [0002, 0070, 0071 and 0076]; figures 1 and 2. | 1-7 |
| X | EP 3360836 A1 (KONE CORP) 15/08/2018; abstract; paragraphs [0033, 0049, 0058, 0065, 0067, 0070]; figures 2, 4-7. | 1-7 |
| X | US 2005231207 A1 (GOLDWATER DAN ET AL.) 20/10/2005; paragraphs [0061, 0065, 0086, 0093-0096]; figures 11, 20. | 1-7 |
| X | WO 2013110853 A1 (KONE CORP) 01/08/2013; abstract; page 15, lines 11-19; page 15, line 33, to page 16, line 6; page 21, line 33, to page 22, line 12; page 23, lines 16-27; figures 1, 2, 4. | 1-7 |

☒ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | | |
| | | "&" | document member of the same patent family |

| Date of the actual completion of the international search | Date of mailing of the international search report |
|---|---|
| 30/10/2020 | **(03/11/2020)** |

| Name and mailing address of the ISA/ | Authorized officer |
|---|---|
| OFICINA ESPAÑOLA DE PATENTES Y MARCAS | S. Sánchez Paradinas |
| Paseo de la Castellana, 75 - 28071 Madrid (España) | |
| Facsimile No.: 91 349 53 04 | Telephone No. 91 3493280 |

Form PCT/ISA/210 (second sheet) (January 2015)

**INTERNATIONAL SEARCH REPORT**

| International application No. |
| --- |
| PCT/ES2020/070105 |

| C (continuation). | DOCUMENTS CONSIDERED TO BE RELEVANT | |
| --- | --- | --- |
| Category * | Citation of documents, with indication, where appropriate, of the relevant passages | Relevant to claim No. |
| A | US 5649035 A (ZIMMERMAN BERND DIETER   ET AL.) 15/07/1997; column 2, lines 1-21; column 5, line 65, to column 6, line 10; figures 1, 7. | 1-7 |
| A | CN 203090359U U (WEN BIN) 31/07/2013; abstract. | 1-7 |

Form PCT/ISA/210 (continuation of second sheet) (January 2015)

## INTERNATIONAL SEARCH REPORT

Information on patent family members

| International application No. |
| --- |
| PCT/ES2020/070105 |

| Patent document cited in the search report | Publication date | Patent family member(s) | Publication date |
| --- | --- | --- | --- |
| US2005226584 A1 | 13.10.2005 | US6999641 B2 | 14.02.2006 |
| WO2013110853 A1 | 01.08.2013 | PL2807105T T3 | 30.06.2017 |
| | | ES2608481T T3 | 11.04.2017 |
| | | EP3075698 A1 | 05.10.2016 |
| | | SG11201404924P A | 30.10.2014 |
| | | HK1202513 A1 | 02.10.2015 |
| | | CN104136357 A | 05.11.2014 |
| | | CN104136357B B | 08.09.2017 |
| | | US2014305744 A1 | 16.10.2014 |
| | | US9834409 B2 | 05.12.2017 |
| | | FI20125073 A | 25.07.2013 |
| | | FI124486B B | 30.09.2014 |
| | | EP2807105 A1 | 03.12.2014 |
| | | EP2807105 A4 | 14.10.2015 |
| US2005231207 A1 | 20.10.2005 | US2009160426 A1 | 25.06.2009 |
| | | US7752830 B2 | 13.07.2010 |
| | | US7516605 B2 | 14.04.2009 |
| EP3360836 A1 | 15.08.2018 | CN108423503 A | 21.08.2018 |
| | | US2018229970 A1 | 16.08.2018 |
| US5649035 A | 15.07.1997 | NONE | |
| CN203090359U U | 31.07.2013 | NONE | |

Form PCT/ISA/210 (patent family annex) (January 2015)

## INTERNATIONAL SEARCH REPORT

International application No.

PCT/ES2020/070105

CLASSIFICATION OF SUBJECT MATTER

*D07B1/14* (2006.01)
*G01L5/101* (2020.01)
*G01L5/105* (2020.01)
*A63B71/02* (2006.01)
*A63B26/00* (2006.01)